Europäisches Patentamt

(19) **European Patent Office**

**Office européen des brevets**

(11) Numéro de publication: **0 019 505**
**A1**

(12) # DEMANDE DE BREVET EUROPEEN

(21) Numéro de dépôt: **80400533.8**

(22) Date de dépôt: **18.04.80**

(51) Int. Cl.³: **A 01 G 3/08**

(30) Priorité: **20.04.79 FR 7910435**

(43) Date de publication de la demande:
**26.11.80 Bulletin 80/24**

(84) Etats Contractants Désignés:
**BE CH DE GB IT LI**

(71) Demandeur: **Le Cras, Alexandre**
**Les 4 Vents**
**F-56560 Guiscriff(FR)**

(71) Demandeur: **Horellou, Jean-Yves**
**27, rue du Couedic**
**F-29130 Quimperle(FR)**

(72) Inventeur: **Le Cras, Alexandre**
**Les 4 Vents**
**F-56560 Guiscriff(FR)**

(72) Inventeur: **Horellou, Jean-Yves**
**27, rue du Couedic**
**F-29130 Quimperle(FR)**

(74) Mandataire: **Phélip, Bruno (FR) et al,**
**Cabinet Harlé & Léchopiez 21, rue de la Rochefoucauld**
**F-75009 Paris(FR)**

(54) **Machine élagueuse-débroussailleuse du type porté.**

(57) Machine destinée à l'entretien des talus et haies de clôture, délimitant les pâturages et terres de culture.

Elle se compose d'un châssis (1) porté en trois points sur un tracteur comportant à l'arrière un axe transversal horizontal (2) tourillonnant sur deux paliers (3) et sur lequel axe est fixé un support (4) comportant un secteur denté (5) muni de trous permettant une immobilisation par brochage (en 6). Cette plaque-support porte deux paliers (7,8) dans lesquels tourillonne un arbre (9) portant un volant (11) sur lequel sont fixés les outils de coupe (12) à l'aide de chaînes (15). Un protecteur (16) en forme de portion de virole cylindrique est disposé concentriquement au volant et pivote autour d'un axe (17) parallèle à l'arbre (9): sa face interne est garnie de barrettes (18) disposées selon les génératrices, provoquant l'éclatement et le déchiquetage des éléments de branches coupés par les outils (12). L'entraînement en rotation s'effectue à partir de la prise de force du tracteur.

L'invention s'applique plus particulièrement pour le broyage des broussailles et arbustes envahissant les terrains en jachères.

./...

_Fig.1_

TITRE MODIFIÉ
voir page de garde

Nouvelle machine élagueuse-débroussailleuse

La présente invention concerne les machines destinées à l'entretien des talus et haies de clôture, délimitant les pâturages et terres de culture ou bordant les fossés, et plus particulièrement les machines à broyer les broussailles et arbustes envahissant les terrains en jachères.

Jusqu'à une époque relativement récente, cet entretien s'effectuait d'une façon manuelle compte-tenu de l'abondance de main d'oeuvre dans les exploitations agricoles. De nos jours, l'exode rural contribue par contre à accentuer un déficit de personnel, parallèlement à un accroissement des surfaces unitaires des terres de culture, d'où la nécessité d'une mécanisation des opérations d'entretien. L'élagage et le débroussaillage des talus restent indispensables, compte-tenu de ce que les ronces et broussailles gagnent rapidement sur les terres cultivées, l'ombre projetée nuisant également au développement des cultures. Les débroussailleuses existantes sont d'une grande complexité les rendant de ce fait onéreuses tant à l'achat qu'au cours de leur utilisation nécessitant un entretien suivi. Ces machines vont de l'outil portatif aux machines automotrices de forte puissance en passant par les modèles actionnés par tracteur. Les machines utilisées en milieu rural pour effectuer les travaux de débroussaillage appartiennent soit à une collectivité locale, soit à une entreprise spécialisée : elles sont affectées au nettoyage des sous-bois, ou à l'entretien de la voirie communale. Les débroussailleuses mécaniques adaptables sur tracteur et destinées aux opérations diverses telles que débroussaillage et fauche de bordure, accotement ou talus, taillage et élagage des haies, d'arbustes ou d'arbres, utilisent généralement un outil de coupe, tel que barre de coupe, scie circulaire, rotor porte-couteaux à tambour ou à plateau dont le mouvement alternatif ou circulaire lui est communiqué par l'intermédiaire de la prise de force du tracteur ou en utilisant la puissance hydraulique équipant celui-ci au moyen d'une transmission appropriée. Ces machines peuvent être soit à axe vertical, soit à axe horizontal. Les premières, d'un rendement élevé, impliquent généralement une puissance importante; en plus, leur vitesse d'avancement est lente. Les secondes, de beaucoup les plus répandues, se composent d'un rotor muni de couteaux ou de fléaux escamotables avec un contre-couteau spécial. Ces fléaux ou marteaux peuvent être du type cuiller, gouge à dent recourbée ou autres. Enfin, certaines débroussailleuses sont à coupe orientable permettant des intervention dans les zones d'accès difficile ; elles sont conçues selon le même principe de base : un châssis-support comportant une réserve d'huile et les différents organes hydrauliques, un premier bras oscillant ou flèche relié au châssis, un deuxième bras oscillant ou balancier axé à l'extrémité de la flèche et un outil de coupe orientable , fixé à l'extrémité du balancier. Une telle conception exige un équipement assez complexe : vérin, moteur hydraulique, pompe.

Ainsi, la demande de brevet DE-OS 2.722.878 décrit et illustre une débroussailleuse à coupe orientable comprenant, comme organes essentiels, un bras porteur, un ensemble piston-tige de piston, un support, des liaisons appropriées et un dispositif de coupe auquel est associé un dispositif protecteur.

Une telle machine correspond aux machines de type classique nécessitant un équipement assez complexe: vérin, moteur hydraulique et analogue.

Le brevet FR 71.07571 publié sous le n°2.127.357 décrit une machine à élaguer comprenant un bras creux monté sur un palier oscillant susceptible de tourner dans un sens ou dans l'autre. Ce bras est entraîné par une vis mûe par un moteur, une scie étant reliée au bras par des organes appropriés à une de ses extrémités.

Le brevet GB 1.144.611 décrit et illustre des éléments de coupe fixés à un maillon d'une chaîne assujettie à un arbre rotatif. L'ensemble chaîne-éléments de coupe est analogue à un fléau.

La machine suivant l'invention permet d'obtenir un débroussaillage ou un défrichage à haut rendement à l'aide d'un mécanisme simple et robuste assurant un broyage des tiges ou branches sectionnées avant leur éjection, à partir de la seule énergie mécanique du tracteur sur laquelle elle est montée.

La machine du type "portée" est disposée en position déportée latéralement par rapport à l'axe longitudinal du tracteur. Le mécanisme de broyage consiste dans un volant portant à sa périphérie des lames de broyage reliées audit volant au moyen de chaînes permettant leur effacement en présence d'un obstacle; Sensiblement concentrique à la révolution de ces lames est placé un protecteur, ou portion de virole cylindrique dont la surface interne comporte selon des génératrices régulièrement espacées des barrettes provoquant, en combinaison avec l'impulsion donnée aux branches sectionnées par les lames, un broyage par éclatement desdites branches. Le positionnement du volant dans un plan perpendiculaire au plan de travail étant celui qui permet d'obtenir le rendement optimum, ledit volant est monté sur un arbre tourillonnant dans deux paliers portés par un secteur pivotant dans un plan contenant ces paliers avec possibilité de brochage en position choisie; l'entraînement en rotation du volant s'effectue à partie de la prise de force du tracteur, au moyen d'un seul organe de transmission mécanique consistant en un élément d'arbre de transmission comportant à chacune de ses extrémités un joint d'accouplement au cardan.

Les dessins annexés illustrent, à titre d'exemple, un mode de réalisation de la machine conforme à la présente invention. Dans ceux-ci :

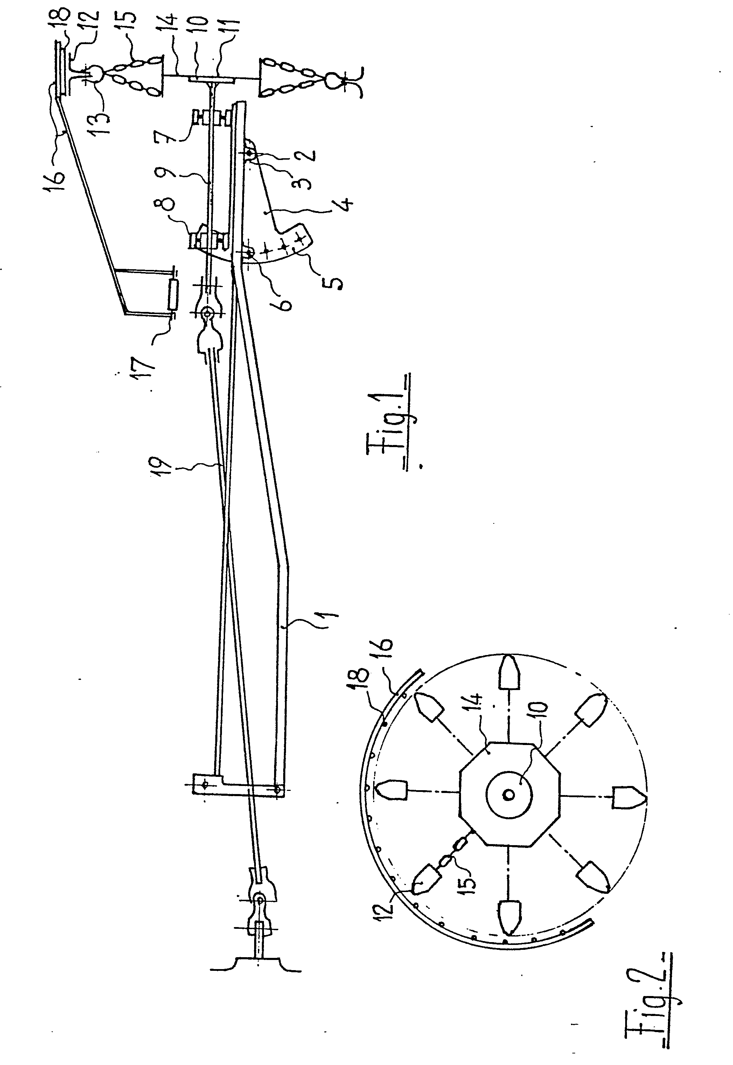

- FIG. 1 représente une vue en élévation de la machine;

- FIG. 2 représente une section transversale de la machine dans le plan du volant vue de l'avant.

Telle qu'elle est représentée, la machine se compose d'un châssis 1 réalisé en profilés assemblés par soudure, comportant un dispositif de fixation sur l'attache "trois points" d'un tracteur selon le principe connu. A l'extrémité arrière de ce châssis est monté un axe transversal horizontal 2 tourillonnant sur deux paliers 3 solidaires du châssis. Sur cet axe est monté une pièce support 4 comportant un secteur denté 5 mini d'une série de trous permettant une orientation de la plaque-support par brochage en face d'un trou 6 du châssis. Sur cette plaque support sont disposés, en ligne et parallèlement à l'axe longitudinal du châssis, deux paliers 7 et 8 à billes, dans lesquels tourillonne un arbre 9 à l'une des extrémités duquel est monté un plateau de fixation 10 destiné à recevoir un volant 11, sur lequel sont fixés les outils de coupe 12. Ceux-ci consistent en des éléments de tôle découpés en forme de dents par exemple, et dont l'extrémité est recourbée par pliage. Ces outils peuvent être groupés deux par deux et réunis dos à dos au moyen d'une pince 13 boulonnée ou rivée sur lesdits outils, laquelle pince est reliée au flasque 14 du volant au moyen de deux chaînes triangulées 15, convergentes vers l'extérieur et situées,au cours de la rotation du volant, dans un plan contenant l'arbre 9. Un dispositif protecteur 16 réalisé selon une portion de virole cylindrique est disposé sensiblement concentrique au volant : il est monté pivotant autour d'un axe 17 parallèle à l'arbre d'entraînement 9. La surface interne de la virole est garnie de barrettes 18 régulièrement espacées et disposées selon les génératrices de la virole cylindrique; ces barrettes provoquent un éclatement et un déchiquetage des éléments de branches après leur sectionnement par les outils de coupe, par le choc provoqué par l'impulsion donnée à ces éléments par la rotation du volant. La position relative angulaire du protecteur par rapport au volant est située en aval de la zone d'intervention des outils de coupe dans le sens de rotation du volant. La fixation des outils de coupe sur le volant au moyen de chaînes permet à ceux-ci de s'effacer en présence d'un obstacle. Selon le position-nement choisi du volant 11 en raison de la structure du terrain où s'effectue l'intervention de la machine, par brochage de la plaque support 4 par rapport au châssis, l'angle formé par l'arbre 9 et la sortie d'arbre ou prise de force du tracteur, varie. La liaison de ces deux arbres s'effectue au moyen d'un arbre de transmission 19 comportant à chaque extrémité un accouplement du type à la cardan, la liaison de l'arbre avec l'un ou les deux accouplements s'effectuant au

6

moyen d'un assemblage coulissant permettant les variations de la cote d'écartement des centres des cardans.

L'invention ne se limite aucunement au mode de réalisation de ses différentes parties spécialement indiquées, mais elle embrasse toutes les variantes possibles à condition que celles-ci ne soient pas en contradiction avec l'objet de chacune des revendications annexées à la présente description.

La machine objet de l'invention peut être utilisée pour tous travaux courants d'élagage et de débroussaillage à la ferme.

7

1. Machine élagueuse-débroussailleuse du type portée dont le châssis (1) comporte à cet effet des moyens de liaison s'adaptant au dispositif d'attache trois points d'un tracteur, caractérisée en ce qu'elle comporte un volant porte-outils (11) dont l'arbre d'entraînement (9) en rotation est réglable en inclinaison par rapport au sol dans un plan vertical parallèle au plan médian longitudinal du tracteur et déporté à gauche de celui-ci, les outils (12) équipant ledit volant (11) sectionnant et broyant les branches et broussailles en combinaison avec un dispositif protecteur (16) entourant localement, et d'une façon sensiblement concentrique, le volume de révolution desdits outils (12), l'entraînement en rotation du volant (11) s'effectuant par la seule énergie mécanique du tracteur, et en ce que l'arbre d'entraînement (9) du volant porte-outils (11) tourillonne dans deux paliers à billes (7,8) disposés en ligne dans un plan parallèle médian longitudinal du tracteur, lesquels paliers (7,8) sont portés par une plaque support pivotante (4) autour d'un axe horizontal (2) disposé transversalement à l'arrière du châssis (1) et tourillonnant dans deux paliers (3) fixés sur ledit châssis (1), laquelle plaque support (4) comporte un secteur (5) muni de trous (6) permettant l'immobilisation de l'axe d'entraînement (9) selon une inclinaison désirée par brochage de ladite plaque (4) par rapport au châssis (1).

2. Machine élagueuse-débroussailleuse selon la revendication 1, caractérisée en ce que le volant porte-outils (11) est constitué d'un flasque central (14) à la périphérie duquel sont reliés les outils de coupe (12) au moyen d'un jeu de deux chaînes triangulées (15) convergentes vers l'extérieur et situées, au cours de la rotation du volant (11), dans un plan contenant l'arbre porte-volant, cette liaison par chaînes (15) permettant l'effacement des outils (12) en présence d'un obstacle, le rayon de giration des outils (12) pouvant être différent pour un même plateau selon la longueur donnée aux chaînes (15), et en ce que les outils (12) sont des éléments de tôle découpés en forme de dents dont l'extrémité est recourbée par pliage, lesquelles dents ainsi obtenues sont groupées deux par deux et réunies dos à dos et fixées à l'extrémité des chaînes de liaison avec le flasque central (14) du volant porte-outils (11).

3. Machine élagueuse-débroussailleuse selon la revendication 1, caractérisée en ce que le dispositif protecteur (16) est une portion de virole cylindrique disposée sensiblement concentrique au volant (11) et montée pivotante autour d'un axe (17) parallèle à l'arbre d'entraînement (9) du volant (11), la surface interne de laquelle virole comporte, disposées à intervalles réguliers et selon les génératrices, des barrettes (18) provoquant l'éclatement et le déchiquetage des éléments de branches ou de broussaille après leur sectionnement par les outils de coupe (12), par le choc de ces éléments sous l'impulsion créée par la rotation du volant (11).

4. Machine élagueuse-débroussailleuse selon la revendication 1, caractérisée en ce que l'entraînement en rotation du volant porte-outils (11) à partir de l'arbre de sortie ou prise de force du tracteur est un arbre de transmission intermédiaire (19) comportant à chacune de ses extrémités un joint d'accouplement dit à la cardan, la liaison en rotation dudit arbre de transmission (19) avec l'un ou les deux accouplements s'effectuant au moyen d'un assemblage coulissant.

16 18 13 12 15 14 10 11

17 19 8 9 7

6 3 2

5 4

1

_Fig.1_

18 16

12

15 14

10

_Fig.2_

1/1

0019505

0019505

Office européen
des brevets

## RAPPORT DE RECHERCHE EUROPEENNE

Numéro de la demande

EP 80 40 0533

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendication concernée | |
| D | <u>DE - A - 2 722 878</u> (MOHN)<br>* Description, figures *<br><br>-- | 1,3 | A 01 G 3/08 |
| D | <u>FR - A - 2 127 357</u> (HAMON)<br>* Page 2, ligne 29 - page 14, ligne 7; figures 1,2,3 *<br><br>-- | 1 | |
| A | <u>FR - A - 971 090</u> (RICHARDSON)<br>* Description, figures *<br><br>---- | 1,4 | |

**DOMAINES TECHNIQUES RECHERCHES (Int. Cl. 3)**

A 01 G   3/00
         3/04
         3/08
A 01 D  35/28
        55/22
        55/18

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cite pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 28-07-1980 | HERYGERS |

OEB Form 1503.1   06.78